# EUROPEAN PATENT SPECIFICATION

(11) **EP 4 301 881 B1**
(45) Date of publication and mention of the grant of the patent: **12.11.2025**
(21) Application number: 22713031.7
(22) Date of filing: 01.03.2022
(51) Int. Cl.: C21B 3/08, C21C 5/52

(54) **AN IMPROVED METHOD FOR THE TREATMENT OF THE BLACK SLAG**
VERFAHREN ZUR BEHANDLUNG VON SCHWARZER SCHLACKE
PROCÉDÉ AMÉLIORÉ POUR LE TRAITEMENT DES SCORIES NOIRES

(30) Priority: 02.03.2021 IT 202100004892
(43) Date of publication of application: 10.01.2024
(73) Proprietor: Truyoins S.r.l., 31100 Treviso (IT)
(72) Inventor: CARLESSO, Franco, 31100 Treviso (IT); PIZZATO, Edoardo, 31100 Treviso (IT)
(74) Representative: Braidotti, Andrea
(86) International application number: PCT/IB2022/051800
(87) International publication number: WO 2022/185206

(56) References cited:
- EP-A1- 2 261 383
- WO-A1-2009/069794
- WO-A1-2009/116684
- GB-A- 1 534 528

## Description

### FIELD OF THE TECHNIQUE

The present invention relates to a method for the treatment of steel mill slag (i.e. slag generated during steel production), in particular of the so-called "black slag", containing lime or lime-based compounds, silicates, aluminates as well as other oxides in lower percentages coming out of an electric furnace for the production of steel. The present invention also relates to an apparatus for implementing said method.

Therefore, the method for treating the slag according to the present invention find advantageous use in the technical sector of steel production and, more particularly, in the treatment of the black slag that is generated inside the electric furnace.

### STATE OF THE ART

As is known, the electric arc furnace, used in the steel industry to produce steel starting from ferrous scrap, generates a further material called "steel mill slag" or "black slag", which forms above the melting pool of the steel, as a result of the oxidation of the scrap and of the compounds generated by the additives inserted in the charge of the electric furnace.

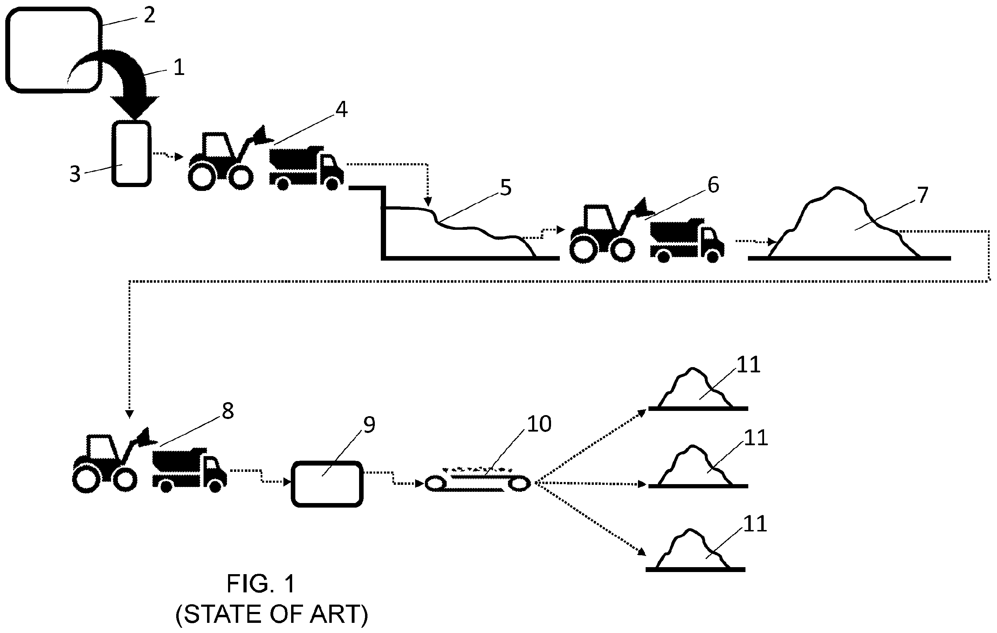

Currently, as shown in fig. 1, the black slag 1 that is generated in the electric furnace 2 is discharged (generally due to the rotation of the furnace) into a cauldron 3 or directly to the ground.

Subsequently, the black slag thus discharged into the cauldron 3 or on the ground is loaded and transported by first means 4 to a collection area 5, generally in a hole, possibly with initial sedimentation in the form of a chute.

In the collection area 5 the black slag is cooled by sending jets of water directly onto the slag itself. By coming into direct contact with the slag, the resulting water used for cooling said slag constitutes a polluting leachate for the environment that must be collected and treated by means of an appropriate plant.

Once cooled, the slag is then suitably deferred (for example by means of a magnet) to remove the largest and most evident pieces of iron.

Subsequently, the slag thus obtained is loaded and transported by second means 6 to a storage area 7 where it remains for a period generally from three to six months in order to obtain the complete extinguishing of the residual live crush present in the slag itself. The storage area 7 must have an extremely wide extension and this to allow the storage of the slag for at least three to six months, slag that is continuously generated during the subsequent work cycles of the furnace 2 which operates 24 hours a day for all days of the week. Furthermore, the storage area 7 must be equipped with a plant for collecting and treating the leachate deriving from rainwater to which the slag that remains in the storage area 7 for at least three to six months is inevitably subjected. The storage area 7 must also be lined with suitable flooring.

From the storage area 7 the slag thus obtained is loaded and transported by third means 8 towards a crushing apparatus 9 and subsequent screening 10 (with possible further iron removal) to separate the final product into various groups 11 based on the size of the grains resulting from the crushing.

Conveniently, the final product obtained from the slag thus treated can therefore be used as a secondary raw material for subsequent applications, for example as an inert aggregate for the production of asphalt, various concrete products, or as a starting material for the construction of the road flooring and in general of non-structural road works.

In this process, the stabilization phase of the black slag in the storage area 7 is essential, in order to obtain the complete extinguishing of the residual quicklime present in the slag itself, and thus avoid that said lime subsequently swells when it comes into contact with water (for example rainwater), thus causing undesirable damage to the asphalt or to the artifacts containing the product obtained from the aforementioned treatment of the black slag.

It is easy to understand how the traditional method for the treatment of black slag in order to obtain a product to be reused in other applications, and in particular as a secondary raw material, is particularly long, as well as requiring various means of handling (with inevitable consumption and costs ), plants for the treatment of leachate and extremely large spaces.

GB1534528 describes a solution in which the melted slag from the blast furnace at a temperature of about 1300°C is introduced into a rotating tubular cooling reactor, where it remains for a period of time of 2.5 - 6.5 minutes, to thus exit said reactor in the form of small pieces at a temperature of about 1000 - 1100°C and thus pass directly inside a heat exchange tower to recover the heat of said pieces which, leaving the tubular cooling reactor, are still at a particularly high temperature.

WO2009/116684 describes a solution in which the cooling fluid is exclusively sprayed directly on the black slag to be cooled.

WO2009/069794 describes a solution in which the high temperature black slag leaving the electric furnace is first discharged into a hole where a first cooling takes place.

### OBJECTIVES OF THE INVENTION

The purpose of the invention is to propose a method and/or an unclaimed apparatus for treating the black slag, in particular the slag that is generated in the electric furnace in the steel production phase, which allow/allows to overcome, at least in part, the drawbacks of the known solutions.

Another purpose of the invention is to propose a method and/or an unclaimed apparatus for treating the black slag capable of increasing energy efficiency, while maintaining high quality standards (in particular in terms of stability) of the material obtained and of safety for operators and equipment.

Another purpose of the invention is to propose a method and/or an unclaimed apparatus for treating the black slag that allow/allows to obtain a high quality final product (in particular in terms of stability), to be used as a secondary raw material for subsequent and various applications.

Another object of the invention is to propose a method which allows to considerably reduce the spaces required for the treatment of the black slag.

Another object of the invention is to propose a method which reduces or avoids the movement of the black slag between various zones and/or stations.

Another object of the invention is to propose a method which does not require means for loading and moving the black slag between various areas and/or stations.

Another object of the invention is to propose a method which allows to reduce the treatment costs of the black slag.

Another object of the invention is to propose a method which allows to considerably reduce the times for the treatment of the black slag.

Another object of the invention is to propose a method which is highly eco-compatible.

Another object of the invention is to propose a method and/or an unclaimed apparatus that does not require/require the implementation of plants for the treatment of leachate.

Another object of the invention is to propose a method and/or an unclaimed apparatus that do/does not require the construction of complex and expensive structural or cladding/flooring works.

Another object of the invention is to propose a method and/or an unclaimed apparatus which is/are usable/s substantially in all steel mills.

Another object of the invention is to treat the black slag in much smaller spaces.

Another object of the invention is to propose a method and/or an unclaimed apparatus for treating the black slag that allow/allows to obtain a high energy efficiency.

Another object of the invention is to propose an unclaimed apparatus for the treatment of the black slag which is constructively completely reliable.

Another object of the invention is to propose an unclaimed black slag treatment apparatus which is resistant and robust.

Another object of the invention is to propose a method and/or an unclaimed apparatus for the treatment of the black slag which is/are easily implementable and with low costs.

Another object of the invention is to propose an unclaimed apparatus which is quick and easy to maintain and which, at the same time, allows to improve the energy efficiency in the recovery of the black slag, while at the same time maintaining high quality standards of the material obtained.

Another object of the invention is to propose a method and/or an unclaimed apparatus for treating the black slag which is/are alternative/and improved with respect to the known solutions.

### SUMMARY OF THE INVENTION

All these objects, considered both individually and in any combination thereof, and others which will result from the following description, are achieved, according to the invention, with a method of treating the black slag with the characteristics indicated in claim 1.

### DESCRIPTION OF THE FIGURES

The present invention is further clarified hereinafter in some of its preferred embodiments reported for purely illustrative and non-limiting purposes with reference to the attached drawing tables, in which:
- Figure 1: shows a schematic general view of a method of treatment of the black slag according to the state of the art,
- Figure 2: shows in general schematic view an apparatus for the treatment of black slag according to the invention,
- Figure 3: shows in general schematic view an alternative embodiment of the apparatus for the treatment of the black slag according to the invention,
- Figure 4: shows a phase equilibrium diagram for CaO-SiO₂-Al₂O₃,

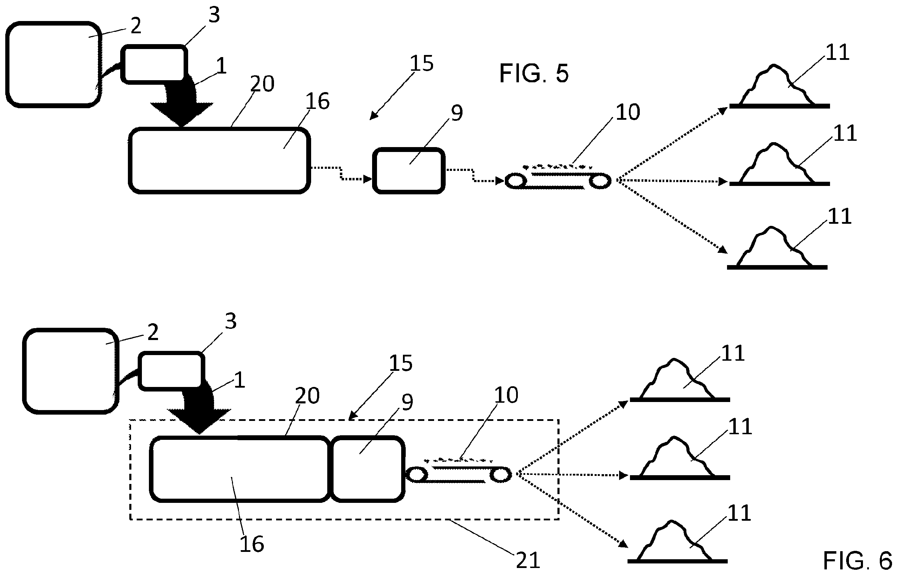

- Figure 5: shows in general schematic view a further embodiment of the method for the treatment of black slag according to the invention,
- Figure 6: shows in general schematic view a variant of the method of fig. 5.

### DETAILED DESCRIPTION OF THE INVENTION AND OF SOME OF ITS PREFERRED EMBODIMENTS

The present invention relates to a method and an apparatus, indicated as a whole with the reference number 15, for the treatment of black slag 1 or steel mill slag, which contains lime or lime-based compounds and which is generated in the electric furnace 2, preferably arc furnace (also known as "EAF"), which is used in the steel industry to produce steel starting from ferrous scrap.

In particular, the term "black slag" 1 hereinafter refers to the slag that forms above the steel melting bath, as a result of the oxidation of the scrap and of the compounds generated by the additives inserted in the charge of the electric furnace to produce steel starting from scrap. In particular, the black slag 1 is a waste material that contains various components and, in particular, contains lime (CaO) or lime-based compounds, and, therefore, is advantageously recoverable. Conveniently, the black slag 1 is about 70 - 95%, preferably about 80-90%, formed by the following components: CaO (lime), FeO, SiO₂ and Al₂O₃, suitably, the quantities of the individual components vary according to the composition of the black slag.

Advantageously, the apparatus 15 according to the present invention can be operatively associated with a steel production plant and/or its derivatives or variants.

Conveniently, the apparatus 15 according to the present invention is suitable for use in a plant for the recovery of the black slag 1 that is generated inside the electric furnace 2 in the steel production phase.

The method according to the invention provides for cooling the black slag 1 leaving the electric furnace 2.

The method according to the invention provides for immediately cooling the black slag 1 leaving the electric furnace 2 or for cooling it after its collection in a cauldron 3.

The method according to the invention provides for cooling the black slag 1 immediately after its exit from the electric furnace 2 or immediately after its collection in a cauldron 3. Conveniently, this can be achieved by directly discharging the black slag 1 at the outlet from the electric furnace 2 inside a cooling device 20, or by unloading the black slag 1 exiting the electric furnace 2 first inside a cauldron 3 and then unloading it from the latter directly into a cooling device 20. Conveniently, the black slag 1 can remain in the cauldron 3 as long as it remains in the liquid or fluid state.

Conveniently, the method provides for cooling the black slag 1 leaving the electric furnace 2 and which is at a temperature corresponding to or close to the melting temperature of the steel, i.e. it is at a temperature of about 1400-1800°C, preferably of about 1600°C.

Preferably, in a possible implementation variant, the method according to the invention provides for cooling the black slag 1 immediately after being discharged, at the outlet from the electric furnace 2, into a cauldron 3.

The black slag 1 at the outlet from the electric furnace 2 is cooled indirectly, i.e. by indirect contact between the black slag and a cooling fluid (for example air and/or water).

For this purpose, the black slag 1 is discharged into a device 20 for cooling the black slag. The black slag 1 exiting the electric furnace 2 is discharged into a device 20 for indirect cooling of the black slag, i.e. a device which is configured to cool the black slag in the face of an indirect (i.e. non-contact) heat exchange between the black slag 1 which enters and/or passes through the device and a cooling fluid which enters and/or passes through said device 20.

The cooling device 20 is a rotating tubular reactor. In a possible embodiment, the cooling device 20 comprises a rocking reactor. In a possible embodiment, the cooling device 20 comprises a vibrating reactor. In a possible embodiment, the cooling device 20 comprises a floating reactor.

The black slag 1 that is generated in the electric furnace 2 is discharged (generally due to the rotation of the furnace) directly and immediately inside the cooling device 20. In particular, the cooling device 20 is positioned and/or can be positioned at the exit of the black slag from the furnace 2.

The black slag 1 that is generated in the electric furnace 2 is first discharged into a cauldron 3 and then from the cauldron 3 is unloaded directly (i.e. without any passage in the hole) to the interior of the cooling device 20.

Preferably, the cooling device 20 can be movable. Preferably, the cooling device 20 is self-propelled or towed.

Advantageously, the cooling device 20 can be mounted on a support structure provided with movement means, such as wheels or tracks, to thus allow the movement of the cooling device towards/away from/to the furnace 2 and/or in correspondence with the furnace 2.

Conveniently, the cooling device 20 of the black slag treatment apparatus 15 can comprise a wall which internally delimits a chamber 16 for receiving and passing through the black slag to be cooled, extending between an inlet opening for the slag to be cooled and an outlet opening for the cooled slag.

Preferably, the inlet opening of the cooling device 20 receives the black slag 1 which exits directly from the electric furnace 2. In a possible alternative embodiment, the inlet opening of the cooling device can receive the black slag 1 from a cauldron 3 which, in turn, receives said black slag directly from a corresponding outlet of the electric furnace 2.

Conveniently, in the method according to the invention, the black slag 1 leaving the electric furnace 2 is never discharged into a hole, and in particular, it is not discharged into a hole before it enters the cooling device 20.

Conveniently, in the method according to the invention, the black slag 1 leaving the cooling device 20 is not discharged or moved inside a cooling tower heat exchange. Preferably, the black slag 1 leaving the cooling device 20 is ready to be crushed and sieved.

Conveniently, the cooling device 20 can comprise a loading hopper (not shown) for conveying the black slag 1 into the device itself directly from the outlet of the electric furnace 2 and/or immediately after its exit from said furnace and/or after its collection in a cauldron 3.

Advantageously, in correspondence with the inlet opening of the cooling device 20, a preferably vibrating protection grid can be provided to prevent any pieces of not yet melted scrap present on the furnace.

In a preferred embodiment, the cooling device 20 of the black slag treatment apparatus 15 can comprise at least one rotating reactor (or drum), substantially tubular (preferably cylindrical), equipped with at least one wall which internally delimits a chamber 16 for receiving and crossing the black slag to be cooled, extending between an inlet opening for the slag 1 to be cooled and an outlet opening for the cooled slag.

Advantageously, the cooling device 20 can comprise a rotating reactor for treating the slag which can be of any traditional type.

Preferably, the cooling device 20 comprises cooling means (not shown) of the wall which delimits the chamber 16 inside it, to thus indirectly cool the material (black slag) that passes through said chamber.

Conveniently, the cooling device 20 comprises means for indirectly cooling the black slag that passes through said chamber 16 and, in particular, these means may comprise:
- means (e.g. nozzles) for spraying a cooling fluid (preferably water) on the outer surface of said wall,
- means for dropping a cooling fluid (preferably water) onto the external surface of said wall,
- refrigerating plates fixed to said wall and comprising ducts for the circulation of a refrigerant fluid, and/or
- at least one interspace/jacket, possibly made by means of modular panels, which is defined externally around said wall and which defines a chamber permeated by a cooling fluid.

Preferably, said cooling means of the supply device 20 can comprise at least one distribution circuit for the cooling fluid arranged at least partially around the device and configured to receive a cooling fluid (preferably water) from the supply means.

Operationally, the cooling fluid acts on the wall of the chamber 16 in such a way as to cool said wall, and consequently also indirectly cool the black slag contained in said chamber.

Advantageously, the apparatus 15 according to the invention further comprises means for feeding at least one cooling fluid (preferably water) to the cooling means (not shown) of the cooling device 20.

Conveniently, the means for feeding the cooling fluid are fluidically connected at the inlet to the cooling means to thus supply the latter with the cooling fluid.

Preferably, the cooling fluid supply means comprise at least one fluidic circuit which is connected at the inlet with an external supply, in particular mains water, of the cooling fluid, while at the outlet it is connected with the cooling means of the device.

Conveniently, the method according to the invention provides for cooling, preferably indirectly, the black slag 1 leaving the electric furnace 2, and which is at a T₁ of about 1400-1800°C, until it reaches at least an intermediate temperature or final T₂ (which is less than T₁).

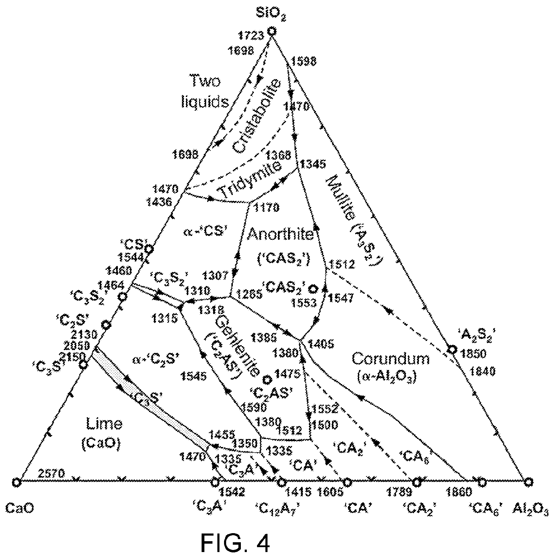

Conveniently, the intermediate or final temperature T₂ is the temperature at which the phase change of stable mineralogical structures containing lime (CaO) or lime-based compounds occurs, cf. fig. 4 related to the CaO-SiO₂-Al₂O₃.

The temperature T₂ varies according to the composition of the black slag itself and, for example, can be around 500-1200°C.

In a possible embodiment, the black slag 1 can comprise a calcium-based compound, in particular the dicalcium silicate (which has a stable β form between 675°C - 1420°C), and suitably the black slag 1 at the outlet from the electric furnace 2, and which is at a T₁ of about 1400-1800°C, is cooled so as to obtain the stable formation of the dicalcium silicate in its β phase.

Conveniently, the transition from temperature T₁ to temperature T₂ is particularly rapid, in order to avoid or thus decrease the formation/presence of free lime in the cooled slag.

Conveniently, the method according to the invention provides for cooling, preferably indirectly, the black slag 1 leaving the electric furnace 2, and which is at a T₁ of about 1400-1800°C, until it first reaches said intermediate temperature T₂ and then until it reaches a final temperature T₃ which is suitable for the subsequent handling of the slag 1. The final temperature T₃ is equal to or lower than about 150°- 300°C, preferably it is equal or less than about 70°-100°C.

Conveniently, the inlet temperature of the black slag in the cooler 20 corresponds to the temperature T₁, while the outlet temperature of the black slag from the cooler 20 may correspond to the temperature T₂ or T₃.

The outlet temperature of the black slag from the cooling device 20 corresponds to the temperature T₃ which is suitable for the subsequent handling of the slag 1; preferably, the final temperature T₃ is equal to or lower than about 150°- 300°C, preferably it is equal to or lower than about 70°-100°C.

Conveniently, T₂ is ≥ of/to T₃. Basically, the temperature T₂can correspond to the final cooling temperature that the black slag reaches at the outlet of the cooler, or it can correspond to an intermediate cooling temperature that is higher than the temperature T₃ that the black slag reaches at the outlet of the cooler.

Conveniently, in the method according to the invention the cooling rate of the black slag is such that the mineralogical structures stable at high temperature (i.e. at temperatures higher than T₂) remain stable even at lower temperatures (i.e. at temperatures lower than T₂) , as it results from the diagram of fig. 4 related to the phase equilibrium CaO-SiO₂-Al₂O₃. Conveniently, the quantity of free lime (CaO) or its compounds below the temperature T₂ is greater the longer is the time to carry out the cooling and, therefore, advantageously, the method according to the invention is configured to carry out a cooling particularly fast to reduce as much as possible the quantity of free lime, or its compounds, present in the cooled slag.

Conveniently, in the method according to the invention, the indirect cooling of the black slag leaving the electric furnace is carried out in a time shorter than the duration of the steel melting cycle inside the electric furnace and, in particular, takes place in less than approximately 30-45 minutes and, in particular, takes place in a time between about 10 and about 30 minutes. Appropriately, the indirect cooling of the black slag leaving the electric furnace is carried out for a time interval ranging from a minimum of about 10 minutes to a maximum of about 30 - 45 minutes.

The indirect cooling of the black slag leaving the electric furnace 2 is carried out inside the cooling device 20 for a time interval ranging from a minimum of about 10 minutes to a maximum of about 30 - 45 minutes, and according to the present claimed invention in a time interval between about 10 minutes and about 30 minutes.

Preferably, the cooler is configured so that the cooling rate of the black slag - and in particular the time of passage of the black slag from the temperature T₁ (which corresponds to the inlet temperature of the black slag into the cooler) to the temperature T₂ or T₃ (which also corresponds to the outlet temperature of the black slag from the cooler) - is less than the duration of the steel melting cycle inside the electric furnace and, in particular, takes place in less than about 30 -45 minutes and, preferably, takes place in a time interval comprised between about 10 and about 30 minutes, in particular according to the chemical composition of the black slag and/or the steel.

Conveniently, the cooling of the black slag inside the cooling device 20, and in particular the residence time of the black slag inside said device, is carried out in a time shorter than the duration of the melting cycle of the steel. inside the electric furnace and, in particular, takes place in less than about 30-45 minutes and, preferably, takes place in a time interval between about 10 minutes and about 30 minutes, in particular depending on the chemical composition of the black slag and/or steel. Advantageously, this allows the cooling device to be promptly released from the cooled black slag, in order to be able to receive the black slag generated in the subsequent melting cycle.

Conveniently, in the method according to the invention, the black slag leaving the electric furnace is loaded discontinuously into the cooling device 20 which, therefore, is configured to work in "batch". Preferably, the loading time of the black slag 1 to be cooled in the cooling device 20 is equal to or less than about five minutes, and more preferably it is equal to or less than about two minutes.

The method according to the invention then provides that the cooled black slag is crushed into pieces of various sizes, and subsequently sieved, to thus separate the finer pieces from the larger ones into two or more groups, that is, so as to separate into two or more groups the pieces having a smaller or larger size than at least one predetermined size.

The treatment apparatus 15 according to the invention comprises, downstream of the cooling device 20, a crushing module 9 for the cooled slag into pieces of various sizes and a sieving module 10 to thus separate the finer pieces from the larger ones into two or more groups 11, i.e. so as to separate into two or more groups the pieces having a size smaller or larger than at least one predetermined size.

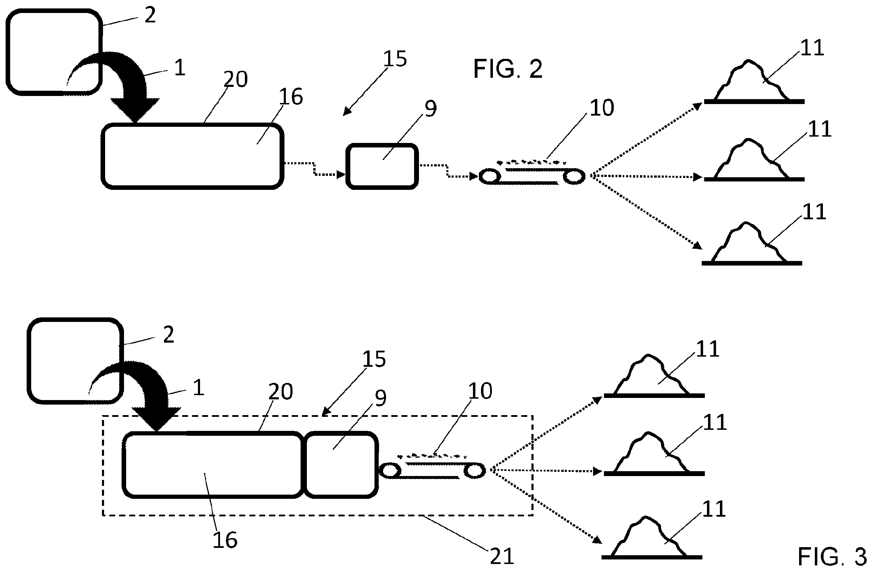

Conveniently, in a possible embodiment of the cooling apparatus 15 (see fig. 3), the cooling device 20, the crushing module 9 and the sieving module 10 are defined in sequence within the same apparatus/machine 21.

Conveniently, in another possible embodiment of the cooling apparatus (see Fig. 2), the cooling device 20, the crushing module 9 and the sieving module 10 can be defined by distinct and independent machines/equipment positioned in sequence.

Advantageously, in a possible embodiment, the black slag 1 leaving the furnace 2 is mixed inside the cooling apparatus with known additives, for example inert materials (silicates, aluminates or others), to capture the any free lime (CaO), or its compounds, present in the slag itself.

Advantageously, in a possible embodiment, the feeding means of the cooling device 20 receive the cooling fluid from the same water network that feeds a steel production plant and/or the like.

The cooling fluid advantageously comprises water, in particular already used or usable in the steel production plant.

More in detail, the feeding means of the cooling device 20 take the high-pressure cooling fluid from an upstream plant, in particular from a steel production plant and transport it to the cooling means of the cooling device 20.

Advantageously the chamber 16 of the cooling device 20 is configured to advance the material to be cooled (i.e. the black slag) in a first direction of movement. Conveniently, the cooling means can be configured to move the cooling fluid from an inlet section to said outlet section in a second direction at least partially opposite to said first direction. In particular, the cooling fluid acts externally on the chamber 16 crossing it along its longitudinal development in a direction which is opposite to that with which the black slag 1 to be cooled crosses/advances inside said chamber.

In accordance with a preferential embodiment, the reactor of the cooling device 20 preferably has a substantially cylindrical shape and extends along a main axis X between a first end (not shown), in which the inlet opening is provided, and a second end, in which the outlet opening 5 is made. Conveniently, the cooling device 20 comprising a tubular reactor rotating around its longitudinal development axis X. Preferably, the first direction of movement of the slag to be cooled is substantially parallel to the main axis X and facing from the inlet opening towards the outlet opening.

Advantageously, the reactor of the cooling device 20 is made of thermally conductive material, in particular it is made of metallic material, such as for example steel.

Conveniently, in order to cool the black slag in an optimal manner, the reactor 2 is rotatably mounted on a support structure and can be rotated about the main axis X by motorization means.

Advantageously, the support structure is intended to be rested on the ground and comprises at least one lower support base and is preferably made of metallic material.

Preferably, the support structure supports the reactor in such a way that its main axis X is substantially horizontal or is at least partially inclined, from a greater height in correspondence with the inlet opening, to a smaller height in correspondence with the outlet opening. Conveniently, further motorization means (not shown) can be provided to vary the inclination of the reactor with respect to the horizontal.

Conveniently, the cooling device 20 comprises at least one electronic control unit (not shown) which is electronically connected to the motorization means and programmed to control them to vary the rotation speed of the reactor and/or the inclination of the reactor with respect to the horizontal. Preferably, the electronic control unit is programmed to control the rotation of the reactor in a first direction of rotation, for example clockwise, or counterclockwise. Conveniently, the electronic control unit can be programmed to rotate the reactor in more than one direction of rotation, alternately, in order to mix the black slag inside the chamber 16 and increase the cooling efficiency of the device. 20.

Conveniently, the cooling device 20 comprises at least one temperature sensor operatively associated with the reactor, electronically connected to the electronic control unit and configured to detect at least one temperature measurement of the reactor and/or of the black slag to be cooled. The electronic control unit is advantageously configured to receive the temperature measurement and correspondingly control the motorization means for varying the rotation speed of the reactor and/or the inclination of the reactor.

Advantageously, the electronic control unit comprises at least one microcontroller, such as for example a PLC (programmable logic controller) or the like. Preferably, the electronic control unit further comprises at least one processing module programmed to process the temperature measurement and the flow measurement and generate a corresponding first control signal for the drive means.

Conveniently, the electronic control unit can be connected to the sensors and to the motorization means in any manner known per se to those skilled in the art and therefore not described in detail below. For example, the electronic control unit may provide a wired connection or a wireless connection without thereby departing from the protection scope of this patent.

Advantageously, in a possible embodiment, the treatment apparatus 15 of the black slag comprises a unit for sending a nebulized cooling fluid (preferably water), for example by means of compressed air, directly on the black slag 1 leaving the furnace 2, preferably from the electric furnace. Conveniently, in a possible embodiment, the unit for sending a nebulized cooling fluid can be provided at the outlet of the black slag 1 from the furnace 2, and be positioned upstream and externally with respect to the device for indirect cooling 20 of the black slag. Conveniently, in a possible embodiment, the unit for sending a nebulized cooling fluid can be provided inside - and preferably at the inlet - of the device for indirect cooling 20 of the black slag.

Conveniently, the method according to the invention provides for cooling the black slag 1 leaving the electric furnace 2 indirectly and/or by direct contact with a nebulized cooling fluid, in particular with nebulized water, for example by means of compressed air. Preferably, the method according to the invention provides for cooling the black slag 1 leaving the furnace 2 first by means of a nebulized cooling fluid and subsequently by indirect cooling (i.e. by indirect heat exchange between a cooling fluid and the black slag). Conveniently, the nebulized cooling fluid can be the same or even different from the cooling fluid used for indirect heat exchange.

Conveniently, in one of its possible embodiments, the method according to the invention provides for cooling the black slag 1 leaving the furnace 2 by means of a jet/spray of a mix (for example an aerosol) of a gas (preferably air or other inert gas) and drops of a liquid (preferably water or other coolant). In particular, this mix of gas and liquid is sent directly onto the black slag 1. Conveniently, the gas acts mainly or only as a transport carrier for the drops of coolant (preferably water) so that, going into direct contact with the black slag, said drops of liquid cause the latter to cool and at the same time evaporate (i.e. change state), thus avoiding the need to set up a plant for collecting the leachate for the liquid. Advantageously, moreover, the use of a mix of air and water allows to reduce the amount of air used compared to known solutions in which air alone is used, and also avoids excessive consumption of water (which instead is at least an order of size lower than the water consumption required in case of indirect cooling, i.e. about the order of tens of liters per minute).

Conveniently, for this purpose, a module (not shown) can be provided configured to generate and send a jet/spray of said mix of gas and liquid drops towards the black slag 1 leaving the furnace 2. Advantageously, said module is configured so that the jet/spray of said mix of gas and liquid drops pushes the black slag coming out of the furnace against a wall of a container, so that the black slag cooled by the liquid drops then falls back onto a conveyor belt to make it thus advance towards the modules or subsequent treatment stations (crushing 9 and/or sieving 10).

Conveniently, said module can be provided in place of and/or in addition to the indirect cooling device 20 of the black slag 1. Conveniently, said module can be provided externally to the cooling device 20 and be positioned at the inlet/upstream with respect to the means of indirect cooling of the black slag. Conveniently, said module can be provided externally to the cooling device 20 and be positioned at the inlet/upstream with respect to the indirect cooling means of the black slag.

Conveniently, the method according to the invention therefore provides for a particularly rapid cooling - preferably in a time of less than about 30-45 minutes, more preferably in a time of between about 10 minutes and about 30 minutes depending on the chemical composition of the black slag and/or steel - the black slag immediately exiting directly from the electric furnace or immediately after the collection of said black slag in a cauldron 3. Conveniently, the faster the cooling, the lower the quantity of free lime, or its compounds, present in the cooled slag.

As is clear from what has been described, the method and/or the apparatus according to the invention is particularly advantageous, since:
- it allows to overcome the drawbacks of the known solutions, in particular by avoiding the numerous movements of the black slag provided in said known solutions; in more detail, this allows to avoid the purchase and use of means of handling and transport between the various areas, thus obtaining an important reduction in costs,
- it allows to treat the black slag in order to obtain more quickly a stable and high quality material which can then be suitably used for various applications, in particular as a secondary raw material,
- does not require any leachate treatment plant as there is no direct contact of the black slag with water or other cooling fluid,
- does not require to have large spaces available for collection areas or storage areas and also does not require special or dedicated structural or flooring/cladding works,
- is able to increase energy efficiency, is able to increase safety for operators and equipment and is also highly reliable in construction and operation,
- it allows to cool the black slag in an optimal way, that is it obtains an optimal cooling of the black slag while obtaining the aforementioned high energy efficiency;
- it is easy to implement and with low costs.
- it is an alternative and an improvement with respect to the known solutions.

In particular, the method according to the present invention differs from the solution of GB1534528 in that it provides indirect cooling of the black slag for a period of time between about 10 minutes and about 30-45, it differs from the solution of WO2009/116684 in that provides indirect cooling and also differs from the solution of WO2009/069794 in that it provides for cooling the black slag immediately after its exit from the electric furnace or its collection in a cauldron, thus avoiding unloading and preliminary cooling in a hole.

The present invention has been illustrated and described in some of its preferred embodiments, but it is understood that executive variations may apply thereto in practice, without however departing from the scope of protection of the present patent for industrial invention.

## Claims

1. Method for the treatment of black slag (1), which contains lime (CaO) or lime-based compounds, and which is generated in an electric furnace (2) to produce steel starting from scrap, **characterized by** the fact that said black slag is indirectly cooled, immediately after its exit from said electric furnace (2) or after its collection in a cauldron (3), for a period of time between about 10 minutes and about 45 minutes, preferably between about 10 minutes and about 30 minutes,
and **characterized in that**:
- said black slag (1) is cooled, immediately after its exit from said electric furnace (2) or immediately after its collection in a cauldron (3), by means of a cooling device (20) comprising a tubular reactor rotating around its longitudinal development axis (X),
- said black slag is indirectly cooled by means of a cooling device (20) until it reaches a final temperature T₃ which is suitable for the subsequent handling of the slag (1), said final temperature T₃ being equal to or lower than about 150°- 300°C.

2. Method according to claim 1, **characterized in that** said cooling device (20) is mobile, preferably self-propelled or towed.

3. Method according to one or more of the preceding claims, **characterized in that** the black slag (1) leaving the electric furnace (2) is discharged directly into said cooling device (20).

4. Method according to claims 1 or 2, **characterized in that** the black slag (1) leaving the electric furnace (2) is discharged onto a cauldron (3) and then from said cauldron (3) is discharged directly into said cooling device (20).

5. Method according to one or more of the preceding claims, **characterized in that** the black slag (1) is also cooled immediately after its exit from the electric furnace (2) or immediately after its collection in a cauldron (3) by direct heat exchange with a nebulized cooling fluid

6. Method according to one or more of the preceding claims, **characterized in that** the black slag (1) is also cooled immediately after its exit from the electric furnace (2) or immediately after its collection in a cauldron (3) by a jet/spray of a mix, preferably an aerosol, of gas with drops of liquid that come into direct contact with said black slag (1).

7. Method according to one or more of the preceding claims, **characterized in that** the cooling of the black slag (1) is carried out in a cooling device (20), preferably a rotary reactor, which comprises means for indirect cooling of the black slag which enters and/or passes through a chamber (16) of said cooling device (20), said means comprising:
- means for spraying a cooling fluid on the outer surface of said wall, and/or
- means for dropping a cooling fluid onto the external surface of said wall, and/or
- cooling plates fixed to said wall and including ducts for the circulation of a cooling fluid, and/or
- at least one interspace which is externally defined around said wall and which defines a chamber permeated by a cooling fluid.

8. Method according to one or more of the preceding claims, **characterized in that** the black slag (1) coming out of the electric furnace (2) is cooled, and which is at a T₁ of about 1400-1800°C, up to bring it at least to a temperature T₂ which is lower than T₁, said temperature T₂ substantially corresponds to the temperature in which the phase change of stable mineralogical structures containing lime (CaO) or its compounds occurs.

9. Method according to one or more of the preceding claims, **characterized in that** the black slag (1) coming out of the electric furnace (2) is cooled, and which is at a T₁ of about 1400-1800°C, up to bring it to a final temperature T₃ which is lower than T₁, and which is suitable for the subsequent handling of the slag (1).

10. Method according to one or more of the preceding claims, **characterized in that** the black slag (1) coming out of the electric furnace (2) is cooled, and which is at a T₁ of about 1400-1800°C, up to bring it first to a temperature T₂ which is lower than T₁ and subsequently to a temperature T₃ which is lower than T₂, said temperature T₂ substantially corresponds to the temperature in which the phase change of stable mineralogical structures containing lime occurs (CaO) or its compounds, and said temperature T₃ which is suitable for the subsequent handling of the slag (1).

11. Method according to one or more of the preceding claims, **characterized in that** the indirect cooling of the black slag inside the cooling device (20) is carried out in a time shorter than the duration of the melting cycle of the steel inside the electric furnace and, in particular, takes place in less than about 30 - 45 minutes.

12. Method according to one or more of the preceding claims, **characterized in that** the black slag thus cooled is then crushed (9) and subsequently sieved (10), to thus separate into two or more groups (11) the pieces having a smaller size or greater than at least one predetermined size.

13. Method according to the preceding claim, **characterized in that** the black slag (1) thus cooled is then crushed in/by a crushing module (9) and subsequently sieved in/by a sieving module (10), said crushing module (9) and said sieving module (10) being defined in sequence within the same apparatus/machine (21) which also comprises said cooling device (20).

14. Method according to the preceding claim, **characterized in that** the black slag (1) leaving the electric furnace or collected in the cauldron (3) is loaded discontinuously into the cooling device (20) and **in that** said device (20) is configured to work in batch.

## Patentansprüche

1. Verfahren zur Behandlung von schwarzer Schlacke (1), die Kalk (CaO) oder kalkbasierte Verbindungen enthält und die in einem Elektroofen (2) erzeugt wird, um Stahl ausgehend von Schrott zu erzeugen, **dadurch gekennzeichnet, dass** die schwarze Schlacke unmittelbar nach ihrem Austritt aus dem Elektroofen (2) oder nach ihrer Sammlung in einem Kessel (3) für einen Zeitraum zwischen etwa 10 Minuten und etwa 45 Minuten, vorzugsweise zwischen etwa 10 Minuten und etwa 30 Minuten, indirekt abgekühlt wird,
und **dadurch gekennzeichnet, dass**
- die schwarze Schlacke (1) unmittelbar nach ihrem Austritt aus dem Elektroofen (2) oder unmittelbar nach ihrer Sammlung in einem Kessel (3) mittels einer Kühlvorrichtung (20) abgekühlt wird, die einen rohrförmigen Reaktor umfasst, der sich um seine Längsachse (X) dreht,
- die schwarze Schlacke mittels einer Kühlvorrichtung (20) indirekt abgekühlt wird, bis sie eine für die nachfolgende Handhabung der Schlacke (1) geeignete Endtemperatur T₃ erreicht, wobei die Endtemperatur T₃ gleich oder kleiner als etwa 150°-300°C ist.

2. Verfahren nach Anspruch 1, **dadurch gekennzeichnet, dass** die Kühlvorrichtung (20) mobil, vorzugsweise selbstfahrend oder geschleppt ist.

3. Verfahren nach einem oder mehreren der vorhergehenden Ansprüche, **dadurch gekennzeichnet, dass** die den Elektroofen (2) verlassende schwarze Schlacke (1) direkt in die Kühlvorrichtung (20) ausgetragen wird.

4. Verfahren nach Anspruch 1 oder 2, **dadurch gekennzeichnet, dass** die den Elektroofen (2) verlassende schwarze Schlacke (1) auf einen Kessel (3) und anschließend aus dem Kessel (3) direkt in die Kühlvorrichtung (20) ausgetragen wird.

5. Verfahren nach einem oder mehreren der vorhergehenden Ansprüche, **dadurch gekennzeichnet, dass** die schwarze Schlacke (1) auch unmittelbar nach ihrem Austritt aus dem Elektroofen (2) oder unmittelbar nach ihrer Sammlung in einem Kessel (3) durch direkten Wärmeaustausch mit einer vernebelten Kühlflüssigkeit abgekühlt wird.

6. Verfahren nach einem oder mehreren der vorhergehenden Ansprüche, **dadurch gekennzeichnet, dass** die schwarze Schlacke (1) auch unmittelbar nach ihrem Austritt aus dem Elektroofen (2) oder unmittelbar nach ihrer Sammlung in einem Kessel (3) durch einen Strahl/Sprühnebel eines Gemisches, vorzugsweise eines Aerosols, aus Gas mit Flüssigkeitstropfen, die in direkten Kontakt mit der schwarzen Schlacke (1) kommen, abgekühlt wird.

7. Verfahren nach einem oder mehreren der vorhergehenden Ansprüche, **dadurch gekennzeichnet, dass** das Kühlen der schwarzen Schlacke (1) in einer Kühlvorrichtung (20), vorzugsweise einem Rotationsreaktor, durchgeführt wird, die Mittel zum indirekten Kühlen der schwarzen Schlacke umfasst, die in eine Kammer (16) der Kühlvorrichtung (20) eintritt und/oder durch diese hindurchtritt, wobei die Mittel Folgendes umfassen:
- Mittel zum Aufsprühen einer Kühlflüssigkeit auf die Außenfläche der Wand und/oder
- Mittel zum Abtropfen einer Kühlflüssigkeit auf die Außenfläche der Wand und/oder
- Kühlen der Platten, die an der Wand befestigt sind und Leitungen für die Zirkulation einer Kühlflüssigkeit enthalten, und/oder
- mindestens einen Zwischenraum, der außen um die Wand definiert ist und der eine von einer Kühlflüssigkeit durchdrungene Kammer definiert.

8. Verfahren nach einem oder mehreren der vorhergehenden Ansprüche, **dadurch gekennzeichnet, dass** die den Elektroofen (2) verlassende schwarze Schlacke (1) abgekühlt wird, und die sich bei einer T₁ von etwa 1400-1800°C befindet, um sie zumindest auf eine Temperatur T₂ zu bringen, die niedriger als T₁ ist, wobei diese Temperatur T₂ im Wesentlichen der Temperatur entspricht, bei der die Phasenänderung stabiler mineralogischer Strukturen, die Kalk (CaO) oder dessen Verbindungen enthalten, auftritt.

9. Verfahren nach einem oder mehreren der vorhergehenden Ansprüche, **dadurch gekennzeichnet, dass** die den Elektroofen (2) verlassende schwarze Schlacke (1) abgekühlt wird, und die sich bei einer T₁ von etwa 1400-1800°C befindet, um sie auf eine Endtemperatur T₃ zu bringen, die niedriger als T₁ ist und die für die nachfolgende Handhabung der Schlacke (1) geeignet ist.

10. Verfahren nach einem oder mehreren der vorhergehenden Ansprüche, **dadurch gekennzeichnet, dass** die den Elektroofen (2) verlassende schwarze Schlacke (1) abgekühlt wird, und die sich bei einem T₁ von etwa 1400-1800°C befindet, um sie zunächst auf eine Temperatur T₂, die niedriger als T₁ ist, und anschließend auf eine Temperatur T₃ die niedriger als T₂ ist, zu bringen, wobei die Temperatur T₂ im Wesentlichen der Temperatur entspricht, bei der die Phasenänderung stabiler mineralogischer Strukturen, die Kalk (CaO) oder dessen Verbindungen enthalten, auftritt, und die Temperatur T₃, die für die anschließende Handhabung der Schlacke (1) geeignet ist.

11. Verfahren nach einem oder mehreren der vorhergehenden Ansprüche, **dadurch gekennzeichnet, dass** die indirekte Abkühlung der schwarzen Schlacke innerhalb der Kühlvorrichtung (20) in einer Zeit erfolgt, die kürzer ist als die Dauer des Schmelzzyklus des Stahls innerhalb des Elektroofens und insbesondere in weniger als etwa 30 - 45 Minuten erfolgt.

12. Verfahren nach einem oder mehreren der vorhergehenden Ansprüche, **dadurch gekennzeichnet, dass** die so abgekühlte schwarze Schlacke (1) dann zerkleinert (9) und anschließend gesiebt (10) wird, um so die Stücke mit einer kleineren Größe oder größer als mindestens eine vorbestimmte Größe in zwei oder mehr Gruppen (11) zu trennen.

13. Verfahren nach dem vorhergehenden Anspruch, **dadurch gekennzeichnet, dass** die so abgekühlte schwarze Schlacke (1) dann in/durch ein Zerkleinerungsmodul (9) zerkleinert und anschließend in/durch ein Siebmodul (10) gesiebt wird, wobei das Zerkleinerungsmodul (9) und das Siebmodul (10) nacheinander innerhalb derselben Vorrichtung/Maschine (21) definiert werden, die auch die Kühlvorrichtung (20) umfasst.

14. Verfahren nach dem vorhergehenden Anspruch, **dadurch gekennzeichnet, dass** die den Elektroofen verlassende oder im Kessel (3) gesammelte schwarze Schlacke (1) diskontinuierlich in die Kühlvorrichtung (20) geladen wird und dadurch, dass die Kühlvorrichtung (20) konfiguriert ist, im Batchbetrieb zu arbeiten.

## Revendications

1. Procédé de traitement des scories noires (1) contenant de la chaux (CaO) ou des composés à base de chaux, et étant généré dans un four électrique (2) pour produire de l'acier à partir de ferraille, **caractérisé par le fait que** lesdites scories noires sont refroidies indirectement, immédiatement après leur sortie dudit four électrique (2) ou après leur collecte dans un chaudron (3), pendant une période de temps comprise entre environ 10 et environ 45 minutes, de préférence entre environ 10 et environ 30 minutes,
et **caractérisé par le fait que** :
- lesdites scories noires (1) sont refroidies, immédiatement après leur sortie dudit four électrique (2) ou immédiatement après leur collecte dans un chaudron (3), au moyen d'un dispositif de refroidissement (20) comprenant un réacteur tubulaire tournant autour de son axe de développement longitudinal (X),
- lesdites scories noires sont refroidies indirectement au moyen d'un dispositif de refroidissement (20) jusqu'à ce qu'elles atteignent une température finale T₃ étant adaptée pour une manipulation ultérieure des scories (1), ladite température finale T₃ étant égale ou inférieure à environ 150°-300°C.

2. Procédé selon la revendication 1, **caractérisé par le fait que** ledit dispositif de refroidissement (20) est mobile, de préférence auto-propulsé ou remorqué.

3. Procédé selon l'une ou plusieurs des revendications précédentes, **caractérisé par le fait que** les scories noires (1) sortant du four électrique (2) sont déchargées directement dans ledit dispositif de refroidissement (20).

4. Procédé selon les revendications 1 ou 2, **caractérisé par le fait que** les scories noires (1) sortant du four électrique (2) sont déchargées dans un chaudron (3), puis dudit chaudron (3) sont déchargées directement dans ledit dispositif de refroidissement (20).

5. Procédé selon l'une ou plusieurs des revendications précédentes, **caractérisé par le fait que** les scories noires (1) sont également refroidies immédiatement après leur sortie du four électrique (2) ou immédiatement après leur collecte dans un chaudron (3) par échange thermique direct avec un fluide de refroidissement nébulisé.

6. Procédé selon l'une ou plusieurs des revendications précédentes, **caractérisé par le fait que** les scories noires (1) sont également refroidies immédiatement après leur sortie du four électrique (2) ou immédiatement après leur collecte dans un chaudron (3) par un jet/une pulvérisation d'un mélange, de préférence un aérosol, de gaz avec des gouttes de liquide qui entrent en contact direct avec lesdites scories noires (1).

7. Procédé selon l'une ou plusieurs des revendications précédentes, **caractérisé par le fait que** le refroidissement des scories noires (1) est effectué dans un dispositif de refroidissement (20), de préférence un réacteur rotatif, qui comprend des moyens de refroidissement indirect des scories noires qui entrent et/ou passent à travers une chambre (16) dudit dispositif de refroidissement (20), lesdits moyens comprenant :
- des moyens de pulvérisation d'un fluide de refroidissement sur la surface extérieure de ladite paroi, et/ou
- des moyens pour faire tomber un fluide de refroidissement sur la surface extérieure de ladite paroi, et/ou
- des plaques de refroidissement fixées à ladite paroi et comportant des conduits pour la circulation d'un fluide de refroidissement, et/ou
- au moins un espace intermédiaire qui est défini extérieurement autour de ladite paroi et qui définit une chambre imprégnée d'un fluide de refroidissement.

8. Procédé selon l'une ou plusieurs des revendications précédentes, **caractérisé par le fait que** les scories noires (1) sortant du four électrique (2) sont refroidies, et ce dernier étant à une T₁ d'environ 1400-1800°C, jusqu'à l'amener au moins à une température T₂ étant inférieure à T₁, ladite température T₂ correspondant sensiblement à la température à laquelle se produit le changement de phase des structures minéralogiques stables contenant de la chaux (CaO) ou ses composés.

9. Procédé selon l'une ou plusieurs des revendications précédentes, **caractérisé par le fait que** les scories noires (1) sortant du four électrique (2) sont refroidies, et ce dernier étant à une T₁ d'environ 1400-1800°C, jusqu'à l'amener à une température finale T₃ étant inférieure à T₁, et qui est adaptée pour la manipulation ultérieure de la scorie (1).

10. Procédé selon l'une ou plusieurs des revendications précédentes, **caractérisé en ce que** les scories noires (1) sortant du four électrique (2) sont refroidies, et ce dernier étant à une T₁ d'environ 1400-1800°C, jusqu'à l'amener d'abord à une température T₂ étant inférieure à T₁ et ensuite à une température T₃ étant inférieure à T₂, ladite température T₂ correspondant sensiblement à la température à laquelle se produit le changement de phase des structures minéralogiques stables contenant de la chaux (CaO) ou ses composés, et ladite température T₃ étant adaptée pour la manipulation ultérieure des scories (1).

11. Procédé selon l'une ou plusieurs des revendications précédentes, **caractérisé par le fait que** le refroidissement indirect des scories noires à l'intérieur du dispositif de refroidissement (20) est effectué en un temps inférieur à la durée du cycle de fusion de l'acier à l'intérieur du four électrique et, en particulier, en moins de 30 à 45 minutes environ.

12. Procédé selon l'une ou plusieurs des revendications précédentes, **caractérisé en ce que** les scories noires (1) ainsi refroidies sont ensuite concassées (9) puis tamisées (10), pour séparer ainsi en deux ou plusieurs groupes (11) les morceaux ayant une taille inférieure ou supérieure à au moins une taille prédéterminée.

13. Procédé selon la revendication précédente, **caractérisé en ce que** les scories noires (1) ainsi refroidies sont ensuite concassées dans/par un module de concassage (9) et ensuite tamisées dans/par un module de tamisage (10), ledit module de concassage (9) et ledit module de tamisage (10) étant définis en séquence dans le même appareil/la même machine (21) qui comprend également ledit dispositif de refroidissement (20).

14. Procédé selon la revendication précédente, **caractérisé par le fait que** les scories noires (1) sortant du four électrique ou recueillies dans le chaudron (3) sont chargées de manière discontinue dans le dispositif de refroidissement (20) et **par le fait que** ledit dispositif (20) est configuré pour fonctionner en série.
